# EUROPÄISCHE PATENTSCHRIFT

(11) **EP 1 760 419 B1**
(45) Veröffentlichungstag und Bekanntmachung des Hinweises auf die Patenterteilung: **29.06.2011**
(21) Anmeldenummer: 05018796.2
(22) Anmeldetag: 30.08.2005
(51) Int. Cl.: F27D 1/00, C03B 5/43, C04B 35/66, B22D 41/02, C21C 7/04

(54) **Verfahren zur Herstellung eines feuerfesten keramischen Produkts**
Method for manufacturing ceramic refractory product
Procédé de fabrication de produit réfractaire céramique

(43) Veröffentlichungstag der Anmeldung: 07.03.2007
(60) Teilanmeldung: 10009378.0
(73) Patentinhaber: Refractory Intellectual Property GmbH & Co. KG, 1100 Wien (AT)
(72) Erfinder: Djuricic Boro, AT 8700 Leoben (AT); Reiterer Franz, AT-8700 Leoben (AT)
(74) Vertreter: Becker, Thomas

(56) Entgegenhaltungen:
- EP-A- 0 472 350
- EP-A- 1 541 259
- US-A1- 2003 104 196

## Beschreibung

Produkte, insbesondere Massen und Formteile, die bei der bestimmungsgemäßen Anwendung feuerfeste Eigenschaften aufweisen, werden insbesondere in Einrichtungen zur Aufnahme, Behandlung und/oder Durchleitung von Schmelzen eingesetzt. Solche Schmelzen können Stahlschmelzen (Eisenschmelzen), Nicht-Eisenschmelzen (wie Kupferschmelzen) aber auch Glasschmelzen oder Gesteinsschmelzen sein, wobei solche Schmelzen üblicherweise Temperaturen zwischen 1000° C und 2.000°C aufweisen.

Der Begriff "feuerfest" bedeutet dabei, dass die Produkte über einen technisch relevanten Zeitraum eine technisch ausreichende Standzeit gegenüber der Schmelze aufweisen.

Entsprechend konzentrieren sich die Anforderungen an das Feuerfestmaterial, mit dem die entsprechenden Einrichtungen (Aggregate) wie Schmelzpfannen oder Schmelzwannen ausgekleidet werden, auf eine hohe Temperaturbeständigkeit, lange Haltbarkeit sowie verschiedene mechanische Eigenschaften, beispielsweise den Elastizitätsmodul. Dies gilt analog für Feuerfestmaterial, das als so genannte Funktionalprodukte benutzt wird. Funktionalprodukte sind feuerfeste keramische Produkte, die neben den genannten Eigenschaften weitere Aufgaben erfüllen: Hierzu gehören: Produkte zum Transport und zur Durchleitung einer Schmelze (wie Rohre, Rinnen), Produkte zur Regelung/Steuerung einer Schmelzeströmung (wie Schieberplatten, Verschlussstopfen, Tundishdämme), Produkte, die einen Aufprallschutz bieten (wie Prallplatten, Pralltöpfe) oder Produkte zum Durchleitung von Behandlungsmedien (wie Gasspüleinrichtungen).

Häufig spielen ein gutes Korrosionsverhalten, eine hohe Temperaturwechselbeständigkeit oder ein guter Oxidationsschutz eine wesentliche Rolle für solche Produkte.

In Kombination mit refraktären Oxiden (wie MgO oder Al₂O₃) kann durch die Zugabe von Kohlenstoff (C) die Korrosionsbeständigkeit feuerfester Produkte gegenüber Prozessschlacken (insbesondere metallurgischen Schlacken) verbessert werden. Durch Zugabe von oxidationshemmenden Zusätzen (so genannten Antioxidantien) in den Feuerfest-Werkstoff lässt sich die Oxidationsneigung des Kohlenstoffs reduzieren.

Wie im Zusammenhang mit dem Korrosionsverhalten dargestellt konzentriert sich die Entwicklung neuer feuerfester Werkstoffe vor allem auf die Verbesserung der Haltbarkeit der Produkte.

Dies gilt für monolithische Massen ebenso wie für geformte Teile, und zwar nicht nur für solche Produkte, die als Auskleidung von Wänden, Böden und Decken entsprechender Schmelzgefäße dienen, sondern auch für die genannten Funktionalprodukte.

Die EP 1 541 259 A1 und die EP 0 472 350 A1 enthalten jeweils den Vorschlag, CaO in einem feuerfesten Produkt zunächst durch eine temporäre Carbonat-Oberfläche gegen Hydratation zu schützen. Nach einer thermisch bedingten Zersetzung des Calciumcarbonats in CaO und CO₂ soll das wieder freie CaO des Feuerfestmaterials dann mit Al₂O; (einer unerwünschten Verunreinigung) aus einer Metallschmelze zu niedrig schmelzenden Calciumaluminaten reagieren und einen Schmierfilm auf der Innenseite des feuerfesten Produkts bilden, der anschließend von vorbeiströmender Metallschmelze leicht ausgewaschen werden kann.

Die Erfindung löst sich von diesen seit Jahrzehnten festgefahrenen Profilen. Kerngedanke der Erfindung ist es, feuerfeste Produkte der genannten Art so zu gestalten, dass die Produkte im jeweiligen Verfahrensprozess aktiv eingesetzt werden können. Das Feuerfestmaterial wird zu einem Bestandteil der Verfahrenstechnik gemacht. Mit Hilfe des Feuerfestmaterials werden die Qualität und Eigenschaften der Schmelze sowie die Qualität und Eigenschaften des aus der Schmelze hergestellten Gegenstandes eingestellt beziehungsweise optimiert. Das Schmelz-/Behandlungsgefäß (nachstehend Einrichtung genannt) wird durch die aktive Rolle des Werkstoffs des feuerfesten Produkts zu einer Art Reaktor für die Einstellung der Schmelze und der daraus hergestellten Gegenstände.

Wie nachstehend im Einzelnen ausgeführt wird lässt sich das feuerfeste Produkt erfindungsgemäß bei entsprechender Anpassung beispielsweise als Spender zur Einführung von Legierungsmetallen in eine Metallschmelze oder als Reaktionspartner einer Glasschmelze einsetzen, um die jeweilige Schmelze in ihrer Zusammensetzung und gegebenenfalls in ihren Eigenschaften gezielt (in gewünschter Weise) zu verändern.

Das Feuerfestmaterial soll zwar seine bisherigen Funktionen, beispielsweise als Auskleidungsmaterial in entsprechenden Schmelzgefäßen, behalten; daneben erhält das Feuerfestmaterial jedoch völlig neue Aufgaben.

Dazu wird das Feuerfestmaterial angepasst, und zwar bereits bei der Herstellung und unter Berücksichtigung der verfahrenstechnischen Parameter der späteren Anwendung. Dies soll an einem Beispiel verdeutlicht werden:

In einer Stahlpfanne, die mit feuerfesten Produkten ausgekleidet werden soll, soll eine Stahlschmelze metallurgisch behandelt werden. Die "Ist-Analyse" der in der Einrichtung befindlichen Stahlschmelze weicht von der "Soll-Analyse" ab. Beispielsweise sind die Gehalte der Legierungsbestandteile Co (Kobalt), Mn (Mangan) und/oder Ce (Cer, auch Cerium genannt) in der Schmelze zu gering.

Gemäß Stand der Technik erfolgt die Zuführung dieser fehlenden Legierungsmetalle beispielsweise über so genannte Legierungsdrähte, wie sie in der DE 29 48 636 A1 beschrieben sind. Die Herstellung dieser Legierungsdrähte ist teuer. Das Einführen der Drähte in die Schmelze stellt einen zusätzlichen Verfahrensschritt dar. Mit Hilfe eines Drahtes lassen sich die fehlenden Legierungsbestandteile nur an einigen konkreten Orten in die Schmelze einführen. Entsprechend aufwändig ist die anschließende notwendige Verteilung in der Schmelze (im Schmelzbad).

Eine andere bekannte Methode besteht darin, die fehlenden Legierungsbestandteile als Pulver auf das Schmelzbad zu werfen. Dabei ergibt sich das Problem, dass ein großer Teil in der Schlacke hängen bleibt, die die Schmelze abdeckt. Eine homogene Dosierung und Verteilung in der Schmelze ist nicht möglich.

Die Erfindung verzichtet auf einen separaten Eingriff in den laufenden Verfahrensprozess. Fehlende Bestandteile der Schmelze können erfindungsgemäß aus dem (ohnehin notwendigen und vorhandenen) Feuerfestmaterial zur Verfügung gestellt werden. Die ursprüngliche chemische Zusammensetzung der Schmelze wird verändert.

Dabei erfolgt eine spezifische Anpassung des Feuerfestmaterials des Produkts an den jeweiligen Anwendungsfall. Der "Anwendungsfall" kann eine einzelne konkrete Schmelze in einer bestimmten Einrichtung betreffen. Der Anwendungsfall kann aber auch typische Rahmenbedingungen und Eigenschaften von bestimmten Schmelzen in entsprechenden Einrichtungen betreffen. Entsprechend kann das Produkt so angepasst werden, dass Abweichungen in den Komponenten und Mengen der Komponenten der Schmelze ganz oder teilweise berücksichtigt werden.

Insoweit betrifft die Erfindung in ihrer allgemeinsten Ausführungsform ein Verfahren zur Herstellung eines keramischen Produkts gemäß Anspruch 1 oder 2.

Die Erfindung setzt bei der Herstellung des feuerfesten Produkts an und zwar unter Berücksichtigung der Eigenschaften und Zusammensetzung der Schmelze, mit der das Produkt bei der Anwendung in Kontakt kommt.

In den Versatz wird gezielt eine Versatzkomponente zugegeben, die im feuerfesten Produkt eine Komponente bildet, die bei der Anwendung (im Kontakt mit der Schmelze) aus dem Produkt in die Schmelze abgegeben wird, um den Anteil dieser Komponente in der Schmelze zu erhöhen.

Dabei kann sich das Feuerfestmaterial anteilig verbrauchen. Der Verschleiß des Produkts wird anwendungsspezifisch beispielsweise so eingestellt, dass während einer Schmelzencharge aus dem erodierten und/oder korrodierten Feuerfestmaterial die gewünschte Menge der gewünschten Komponente(n) in die Schmelze gelangt.

Der Hersteller des Produktes kann konkrete Informationen über die Soll- und Ist-Analysen mindestens einer Schmelze erhalten, die mit dem Produkt in Kontakt gelangt. Diese Informationen können von dem Betrieb, in dem die Produkte eingesetzt werden, stammen. Sie können auch von einem externen Labor bereitgestellt oder geschätzt werden. Der Hersteller des Produkts kann die Rezeptur für das Produkt danach chargenspezifisch oder so einstellen, dass bestimmte Grundkomponenten, die für mehrere Anwendungsfälle benötigt werden, in bestimmter Menge und/oder Aufbereitung bereitgestellt werden. Zum Beispiel kann ein bestimmtes Legierungsmetall in bestimmter Menge in den Versatz gegeben werden, welches üblicherweise in Schmelzen bestimmter Art fehlt oder in zu geringer Konzentration enthalten ist. Dies können zum Beispiel bestimmte Edelmetalle oder Seltene-Erden-Metalle sein.

Die Vorgabe bei der Herstellung des Produkts lautet: Zugabe mindestens einer Substanz in den Versatz (batch) in einer bestimmten Form und Menge derart, dass die Schmelze, mit der das Produkt anwendungsgemäß in Berührung kommt, die gewünschte Veränderung erhält.

Die Veränderung der Zusammensetzung der Schmelze lässt sich nicht nur über den Verschleiß des Feuerfestmaterials erreichen, sondern auch über die Abgabe von Substanzen mit Hilfe des Produkts. Bei der Herstellung des Produkts können beispielsweise folgende Veränderungen erfolgen:

Das Produkt wird mit einer spezifischen Porosität, insbesondere offenen Porosität hergestellt, wobei bestimmte Substanzen, beispielsweise über eine Imprägnierungsbehandlung des Produkts, im Porenraum des Produktes deponiert werden.

Bei der Anwendung kann die Temperatur der Schmelze variiert werden (beispielsweise wird die Temperatur kurzzeitig erhöht), um diese Substanzen, die Bestandteile des feuerfesten Produkts sind, aufzuschmelzen und in die Schmelze abzugeben. Ebenso können bei erhöhter Schmelzentemperatur bestimmte gewünschte Reaktionen zwischen Schmelze und Feuerfestmaterial ausgelöst werden, um so die Schmelze zu verändern.

Der Versatz zur Herstellung des feuerfesten Produktes kann derart angepasst werden, dass das fertige Produkt bei der Anwendung zumindest partiell in eine chemische Reaktion mit der Schmelze tritt.

Die zuletzt genannten Varianten machen es möglich, Reaktionsprodukte zu schaffen, die anschließend als Legierungsbestandteile unmittelbar von der Schmelze aufgenommen werden.

Ein wichtiger Vorteil der erfindungsgemäßen Lösung besteht darin, dass oft eine große Feuerfest-Oberfläche im Kontakt mit einer zugehörigen Schmelze steht, sodass beispielsweise Legierungsbestandteile auch in sehr geringen Mengen (Konzentrationen) gleichmäßig in die Schmelze überführt und homogenisiert werden können. Die Erfindung wird deshalb in besonderem Maße im Zusammenhang mit Komponenten benutzt, deren Masseanteil in der Schmelze <5 %, oft < 1 oder <0,1 % beträgt. Die Korrekturmenge (Erhöhung/Verringerung) beträgt dabei meist deutlich weniger als 1 Masseprozent, oft weniger als 0,5 oder weniger als 0,1 Masseprozent und häufig <500 oder <100ppm. Damit stellt die Erfindung effiziente Möglichkeiten zur Verfügung, eine Legierung mit sehr geringen Mengen an Zusatzstoffen zu verändern (auch micro-alloying genannt).

Die Zuführung bestimmter Substanzen (oder Verbindungen) aus dem Feuerfestmaterial in die Schmelze kann rein physikalisch durchgeführt werden, indem feuerfeste Formteile beispielsweise mit einem entsprechenden Depot ausgebildet werden. Dies kann ein Hohlraum im Produkt sein, der über mindestens eine Kapillare oder einen Kanal mit der Schmelze in Verbindung steht. In diesem Depot können die gewünschten Substanzen aufgenommen werden. Durch Einstellung entsprechender Druckverhältnisse werden die im Depot befindlichen Substanzen abgegeben. Der Druck lässt sich zum Beispiel über die thermische Dehnung des Feuerfestmaterials bei bestimmten Temperaturen oder eine gezielte Gasbildung im Produkt einstellen.

Produkte der genannten Art sollen oft eine hohe Standzeit aufweisen. Werden die Produkte erfindungsgemäß als Spender oder Katalysator bei der Zuführung bestimmter, insbesondere geringer Mengen an Substanzen in die Schmelze genutzt, ergibt sich bei bestimmten Anwendungen ein gezielter Verschleißgrad. Nachstehende Beispiele zeigen, dass dies möglich ist.

Soweit höhere Dosierungen notwendig sind können die Substanzen in schnell verschleißende feuerfeste Produkte integriert werden, beispielsweise monolithische Massen, die chargenweise neu aufgetragen werden. Mit anderen Worten: Vor der Befüllung einer Einrichtung mit Schmelze wird auf die Auskleidung eine monolithische feuerfeste Beschichtung aufgebracht, die die gewünschten Substanzen (Komponenten) enthält. Diese Schicht wird nach Befüllen der Einrichtung mit der Schmelze ganz oder teilweise verbraucht. Die Masse der feuerfesten Beschichtung, die Menge der Dotierungsmittel sowie der anschließende Verschleißgrad können in Abhängigkeit von der Durchsatzmenge der Schmelze zuvor berechnet und entsprechend angepasst werden.

Eine ähnliche Situation kann bei der Verwendung von Prallplatten oder Pralltöpfen erreicht werden. Diese Funktionalprodukte schützen die feuerfeste Auskleidung gegenüber einem aufprallenden Gießstrahl und lenken die Schmelze. Erfindungsgemäß lassen sich diese Prallelemente mit bestimmten Substanzen dotieren und mit einem definierten, anwendungsspezifischen Verschleißgrad herstellen. Die Prallkörper verschleißen dann in bestimmter Zeit und geben parallel zum Verschleiß die gewünschten Substanzen in die Schmelze ab, wo sie aufgrund der Strömung des Gießstrahls gleichmäßig verteilt werden. Auch hier wird die neue Funktion des Feuerfestmaterials als Spender zur Zufuhr bestimmter Komponenten in eine Schmelze deutlich. Dies gilt analog für die Anwendung bei Schieberplatten, Ausgüssen, keramischen Filtern etc.

Bei Schieberplatten verschleißt der Bereich unmittelbar um die Durchflussöffnung (für die Schmelze) besonders schnell. Im Stand der Technik wurde dieser Bereich austauschbar und/oder mit hoher Festigkeit gestaltet. Erfindungsgemäß wird insbesondere dieser Teil einer Schieberplatte materialmäßig so verändert, dass die Schmelze nach Kontakt mit dem Produkt in der gewünschten Weise verändert wird. Entsprechende Einsätze, zum Beispiel in Form von Ringen oder Hülsen, können auch in den Durchlaufbereich von Tauchrohren, Ausgüssen, Gießdüsen oder anderen Teilen integriert werden, die zur Steuerung/Regelung eines Schmelzenstromes dienen. Es können mehrere Einsätze an einem Produkt vorgesehen werden. Damit können gleichzeitig unterschiedliche Korrekturen der Schmelze erfolgen. Analog können feuerfeste keramische Körper beliebiger Geometrie an einer Stelle einer Einrichtung der genannten Art eingesetzt werden, die in Kontakt mit der Schmelze gelangt, um so als Spender für bestimmte Substanzen oder als Reaktionspartner für die Schmelze zu diesen.

Durch die gezielte Veränderung des Feuerfestmaterials der Produkte lassen sich Schmelzen bezüglich bestimmter Komponenten verändern.

Ohne damit andere Komponenten bei der Anwendung der Erfindung auszuschließen sollen nachstehend einige Beispiele verdeutlichen, welche Komponenten für welche Anwendungsfälle in das Feuerfestmaterial integriert werden können:

Bei Produkten zur Anwendung im Kontakt mit Stahlschmelzen oder Nicht-Eisen-Schmelzen:
- Metalle wie Al, Ti, Zr, Ni, Mn, Sc, Ce, Nb, V
   oder Legierungen aus Metallen und anderen Elementen
- Oxide, Boride, Nitride, Carbide

Erfindungsgemäß können über das Feuerfestmaterial

Legierungskomponenten in die Metallschmelze gebracht werden. So können Metalle wie Nb, Ti oder V die Stahlfestigkeit und das Kriechverhalten des Stahls positiv beeinflussen. Nb dient auch zur Verbesserung der Eigenschaften von Legierungen, die in einer korrosiven Umgebung eingesetzt werden.

Bei Produkten zur Anwendung in Kontakt mit Glasschmelzen:
- Oxide, insbesondere Metalloxide, wie SiO₂, Al₂O₃, B₂O3, Nb₂O₅, Na₂O, MgO, PbO, CeO₂, La₂O₃.

Die Erfindung ermöglicht es, durch gezielte Gestaltung des Feuerfestmaterials die Glasqualität zu beeinflussen. Dazu wird die Glasschmelze verändert.

Nb₂O₅ kann die Qualität optischer Gläser verbessern. CeO₂ dient zur Erhöhung der Transparenz des Glases. La₂O₃-Zusätze verbessern die Temperatureigenschaften des Glases.

Die Verwendung des keramischen Produkts dient zur gezielten Veränderung der Schmelze, und zwar durch dosierte, anwendungsspezifische Abgabe mindestens einer Substanz aus dem Produkt in die Schmelze.

Stets wird die Zusammensetzung des Produkts entsprechend der gewünschten Veränderung der Schmelze bei der Herstellung eingestellt. Es entsteht jeweils ein neues Produkt, das sich in seiner Zusammensetzung und/oder seinen physikalisch/mechanischen Eigenschaften von einem Produkt aus dem Stand der Technik unterscheidet, das für gleiche Anwendungen eingesetzt wird/wurde.

Das neue Produkt hat nicht mehr nur eine passive Schutzfunktion sondern tritt in eine geregelte/gesteuerte chemische/metallurgische Wechselwirkung mit der zugehörigen Schmelze. Auf die vorstehenden Ausführungen wird Bezug genommen.

Meist wird die je Zeiteinheit und/oder je Masseneinheit und/oder je Volumeneinheit Schmelze gewünschte Menge der Komponente(n), die von der Schmelze aufgenommen und/oder abgegeben wird (werden), berücksichtigt.

Bei diskontinuierlichen Schmelzprozessen kann diese Größe auf die Menge Schmelze pro Charge bezogen werden.

Bei kontinuierlichen Schmelzverfahren lassen sich die Mengen der Komponenten unter anderem auf die Durchflussmenge der Schmelze pro Zeiteinheit beziehen.

Die Erfindung richtet sich auf Produkte, die bereits bei der Herstellung feuerfeste Eigenschaften aufweisen als auch auf Produkte, die erst bei der bestimmungsgemäßen Anwendung feuerfest werden. Beispielsweise umfasst die Erfindung Produkte der nachstehend genannten Art:
- MgO-C-Steine
- Massen und Formteile auf Tonerdebasis
- Zirkonoxid-Produkte
- Silicasteine
jeweils mit Zusätzen der genannten Art.

Nachstehend werden einige mögliche Anwendungsbeispiele dargestellt.

### Beispiel A:

In einer mit Feuerfest-Steinen ausgekleideten Wanne soll eine Glasschmelze behandelt werden. Eine solche Wanne wird üblicherweise kontinuierlich betrieben, das heißt im Durchlaufbetrieb. Für folgende Berechnungen wird jedoch zur Vereinfachung von einem diskontinuierlichen Betrieb ausgegangen.

Die Wanne hat in der Aufsicht eine Rechteckform (5 x 6,67 m effektives Innenmaß zwischen den Feuerfestwänden). Die befüllbare Höhe beträgt 1,0 m. Daraus folgt ein effektives Wannenvolumen von 33,33 m³. Bei einem angenommenen spezifischen Gewicht der Schmelze von 3000 kg/m³ kann die Wanne 100.000 kg Schmelze aufnehmen.

Die Schmelze steht mit den feuerfesten Wand- und Bodenflächen (=Produkt) der Wanne in Kontakt, die sich insgesamt zu 56,66 m² berechnen. Die Feuerfest-Auskleidung besteht aus gebrannten Zirkonsilikat-Steinen.

Es wird angenommen, dass der Glasschmelze eine Menge von 5 ppm einer Substanz (hier: CeO₂) über den Verschleiß des feuerfesten Produkts zugeführt werden soll. Bezogen auf 100.000 kg Schmelze entspricht dies einer Zusatzmenge von 0,5 kg CeO₂. Bei der Herstellung des Produkts wird dies so berücksichtigt, dass das fertige Produkt 1,0 Gew.-% CeO₂ in homogener Verteilung enthält. Daraus folgt bei einem spezifischen Gewicht des Feuerfestmaterials von 4000 kg/m³, dass 0,0125 m³ Feuerfestmaterial gelöst und in die Schmelze überführt werden müssen, um die gewünschte Zusatzmenge CeO₂ in die Schmelze zu überführen

Dies bedeutet, bezogen auf die gesamte Kontaktfläche Feuerfestmaterial/Glasschmelze von 56,67 m², dass das Feuerfestmaterial in einer Stärke von 0,00022 m (= 0,22 mm) abgetragen werden muss, um 5 ppm CeO₂ in 100.000 kg Schmelze einzubringen. Daraus folgt weiters, dass sich nach rund 450 Chargen (Gesamt-Schmelzenmenge 45.000.000 kg) ein Gesamt-Verschleiß der Feuerfestauskleidung von circa 0,1 m (= 100 mm) ergeben würde.

Dosiert man den Zusatzstoff (CeO₂) in der zehnfachen Konzentration im Produkt, so reduziert sich der gewünschte Verschleiß des Produkts um eine Zehnerpotenz auf 0,02 mm je 100.000 kg Schmelze. Entsprechend würde ein angenommener, tolerierbarer Gesamt-Verschleiß von rund 100 mm (0,1 m) erst nach rund 4500 Chargen (450.000.000 kg Schmelze) erreicht.

Es ist selbstverständlich, dass gleichzeitig auch mehrere Zusatzstoffe (Dotierungssubstanzen) in das Feuerfestmaterial des Produkts eingearbeitet (integriert) werden können. Bei gleichen Mengenanteilen bleibt auch der benötigte Verschleiß des Feuerfestmaterials unverändert.

Eine alternative Ausführungsform sieht Produkte auf Basis Aluminiumoxid (Al₂O₃) mit Zusatz von feinteiligem (<100µm) Lanthanoxid vor.

### Beispiel B:

Bei diesem Ausführungsbeispiel geht es um die Auskleidung eines Drehrohrofens zum Brennen von Zementklinker. Der Drehrohrofen soll eine effektive Länge (entlang der das feuerfeste Material der Auskleidung mit dem Zementklinker in Kontakt steht) von 10 m und einen effektiven Innenradius der feuerfesten Ausmauerung von 3 m aufweisen. Daraus ergibt sich eine Gesamtfläche des Produkts, das in Kontakt mit dem Klinker gelangt, von 188,5 m².

Der Begriff "Schmelze" inkludiert erfindungsgemäß auch Fest-Flüssig-Systeme, wie sie beim Klinkerbrand auftreten. Im Ofen ist stets neben den festen Klinkeranteilen eine bestimmte Menge Schmelze vorhanden.

Es wird eine Klinker-Durchsatzmenge von 50.000 kg/h angenommen. Bei einem spezifischen Gewicht des Zementklinkers von 2.000 kg/m³ ergibt sich ein Durchsatzvolumen von 25 m³ Zementklinker pro Stunde.

Dieser Zementklinker soll mit 5 ppm Zinn (II)-Sulfat versetzt werden. Diese Komponente dient als Mahlhilfsmittel für den gebrannten Zementklinker (EP 0976695 B1). Dies entspricht, bezogen auf den Zementklinker, einer Menge von 0,25 kg/h. Bei einer Zusatzmenge von 1 Gew.-% Zinn (II)-Sulfat im Feuerfestmaterial (gebrannter Magnesia-Chromit-Stein, getränkt mit einer Zinn (II)-Sulfat-Lösung) der Ofenauskleidung müssen demnach 25 kg Feuerfestmaterial je Stunde "verbraucht" werden, um die gewünschte Menge an Zinn (II)-Sulfat in den Klinker überführen zu können.

Daraus berechnet sich bei einem angenommenen spezifischen Gewicht des Feuerfestmaterials von 3.000 kg/m³ ein zu verbrauchendes Feuerfestvolumen von 0,00833 m³ je Stunde.

Dies entspricht bei einer Gesamt-Oberfläche des Feuerfestmaterials von rund 188,5 m² einem benötigten Verschleiß des Feuerfestmaterials von 0,00004 m/h (= 0,04 mm/h).

Die benötigte Verschleißrate verringert sich auf 0,004 mm je Stunde bei einer Zusatzmenge von 10 Gew.-% Zinn (II)-Sulfat im Feuerfestmaterial. Auch hier wird eine homogene Verteilung des Zusatzmittels im Versatz zur Herstellung der feuerfesten Auskleidung angenommen.

Generell ist anzumerken, dass dies insbesondere bei seltenen und/teuren Substanzen nicht unbedingt notwendig ist. Geht man davon aus, dass eine feuerfeste Auskleidung stets eine gewisse Reststärke aus Sicherheitsgründen aufweisen muss so wird deutlich, dass insbesondere dieser, der Schmelze abgewandte Teil der feuerfesten Auskleidung, nicht mit den zusätzlichen Substanzen versetzt sein muss. Bei der Herstellung von Steinen ist dies ohne weiteres dadurch erreichbar, indem beim Pressen der Steine unterschiedliche Versätze in die Pressform eingefüllt werden.

Im Übrigen wurde bereits erwähnt, dass die erfindungsgemäß dotierten Schichten auch als monolithische Massen aufgebracht werden können, beispielsweise auf einem Dauerfutter, welches in konventioneller Weise ausgebildet ist.

### Beispiel C:

Dieses Beispiel zeigt den zuletzt genannten Anwendungsbereich monolithischer Massen. Ausgangspunkt ist eine Pfanne, die hier idealisiert eine Zylinderform besitzen soll. Die Pfanne weist eine Auskleidung aus feuerfesten Steinen auf Basis Tonerde (Al₂O₃) auf, die nachstehend als Dauerfutter bezeichnet wird. Mit diesem Dauerfutter beträgt der innere Radius der Pfanne 1,23 m, die Höhe 3 m. Daraus berechnet sich eine innere Oberfläche des Dauerfutters von 23,2 m². Zuzüglich der Bodenfläche von 4,76 m² ergibt sich eine Gesamt-Oberfläche des Feuerfestmaterials von rund 27,96 m².

Das effektive Pfannenvolumen (14,29 m³) erlaubt bei einem spezifischen Gewicht der Metallschmelze von 7.000 kg/m³ die Aufnahme von 100.000 kg Schmelze.

Die Metallschmelze soll zusätzlich mit je 250 ppm der Legierungsmetalle Lanthan (La) und Titanium (Ti) dotiert werden.

Die Erfindung sieht in diesem Fall die Verwendung einer monolithischen Spritzmasse vor, die auf das Dauerfutter aufgetragen wird. Der Versatz der Spritzmasse enthält neben einer Tonerdematrix und Bindemittel 15 Gew.-% des Legierungsmetalls Lanthan und 15 Gew.-% des Legierungsmetalls Titan. Beide Metalle werden als feines Pulver (<100 µm) den Versatzkomponenten bei der Aufbereitung homogen zugemischt. Um 50 kg (2 x 25 kg) der Legierungsmetalle in die Schmelze überführen zu können müssen entsprechend 166,67 kg Feuerfestmaterial verbraucht werden. Bei einem spezifischen Gewicht der Spritzmasse von 3.000 kg/m³ berechnet sich ein zu verbrauchendes Feuerfestvolumen (auf 100.000 kg Schmelze gerechnet) von 0,055 m³.

Dies entspricht bei der genannten Gesamt-Kontaktfläche von 27,96m² (die hier auch für die Kontaktfläche der auf das Dauerfutter aufgetragenen Spritzmasse angenommen wird) einem Verbrauch (Abtrag) des Feuerfestmaterials von 0,00199 m (= 1,99 mm).

Bei einer benötigten Legierungsmenge von 100 ppm jedes Legierungsmetalls und einer Zusatzmenge von 10 Gew.-% im Feuerfestmaterial der Spritzmasse ergibt sich ein benötigter Verschleißgrad der Spritzmasse von 1,19 mm auf 100.000 kg Schmelze gerechnet.

### Beispiel D:

Ausgangspunkt ist die Stahlgießpfanne gemäß Beispiel C. Auch die Menge der Schmelze soll gegenüber Beispiel C unverändert bleiben.

Im Unterschied zu Beispiel C wird hier jedoch davon ausgegangen, dass die Schmelze mit einer Menge von 5 ppm Niob (Nb) dotiert werden soll. Es werden also 0,5 kg Niob pro 100.000 kg Schmelze benötigt.

Aufgrund der geringen Menge an der Komponente Niob, die aus dem Produkt (Auskleidungsmaterial) in die Metallschmelze überführt werden soll, kann auf die Verwendung einer Spritzmasse mit hohem Verschleiß verzichtet werden. Die benötigte Niob-Menge kann über einen minimalen Verschleiß der feuerfesten Stein-Ausmauerung in die Schmelze überführt werden. Dazu wird der Versatz zur Herstellung der Steine so eingestellt, das das fertige Produkt (auf Basis MgO-C) 1 Gew.-% Niob in Form von feinen Teilchen (< 100 µm) als Ferrolegierung enthält. Bezogen auf 100.000 kg Schmelze müssen dann 50 kg Feuerfestmaterial verbraucht werden (oder 0,0167 m³, bei einem spezifischen Gewicht des Feuerfestmaterials von 3000 kg/m³).

Bezogen auf die Gesamt-Kontaktfläche Feuerfestmaterial/Stahlschmelze ergibt sich ein Verbrauch von 0,6 mm Feuerfestmaterial je 100.000 kg Schmelze. Umgerechnet auf 100 Chargen entspricht dies einem Gesamtverschleiß des Feuerfestmaterials von rund 60 mm (= 0,06 m).

Dieser Gesamtverschleiß mit je 100 Chargen kann um eine 10er-Potenz (auf 0,006 m) reduziert werden, wenn die Menge an Niob im Feuerfestmaterial von 1 auf 10 Gew.-% erhöht wird.

Das Feuerfestmaterial kann beispielsweise auch ein mit Siliziumnitrid gebundenes Siliziumcarbidmaterial sein.

Dieses Beispiel lässt sich im Wesentlichen analog auf das Schmelzen/Behandeln einer Nicht-Eisen-Schmelze, beispielsweise einer Schmelze aus einer Aluminiumlegierung, übertragen. Niob wird dabei durch Scandium ersetzt.

### Beispiel E:

Im Rahmen eines Verfahrens zur Behandlung einer Stahlschmelze sollen 100.000 kg Stahl durch einen zylinderförmigen ZrO₂-Einsatz einer Gießdüse aus Zirkoniumoxid (ZrO₂) strömen. Der Zylinder weist eine Höhe von 0,2 m und einen Innenradius von 0,03 m, somit eine innere Mantelfläche von 0,0377 m² auf.

Erfindungsgemäß wird dieser Verfahrensschritt genutzt, die Metallschmelze mit 1 ppm Ti (Titan) zu legieren. Für 100.000 kg Schmelze werden dann 0,1kg Titan benötigt. Der Versatz zur Herstellung des zylinderförmigen Körpers wird mit 30 Gew.-% Titan aufbereitet.

Die Stahlschmelze kann mit 1 ppm Titan legiert werden, wenn 0,33 kg Feuerfestmaterial (= 0,00011 m³ Feuerfestmaterial bei einem spezifischen Gewicht des Feuerfestmaterials von 3.000 kg/m³) gelöst werden.

Bezogen auf die Mantelfläche von 0,0377 m² entspricht dies einem Verbrauch des Feuerfestmaterials von 0,00295 m (= 2,95 mm).

Bei einem technisch vertretbaren Verschleiß des Feuerfestmaterials in einer Stärke von 0,01 m (= 10 mm) entspricht dies circa 3 Chargen der genannten Größenordnung.

Eine Ausführungsform sieht eine poröse Zr02-Keramik vor, in der das Titan als Ferrotitan infiltriert ist.

### Allgemein gilt:

Aus Gründen der Vereinfachung wurde bei vorstehenden Berechnungen die Bezugsgröße Kontaktfläche (Mantelfläche) des Feuerfestmaterials nicht verändert. Es ist selbstverständlich, dass sich mit jedem Verschleiß die Mantelfläche entsprechend vergrößert. Der benötigte, als Volumen berechnete Verschleiß des Feuerfestmaterials führt dazu, dass die Verschleißtiefe des Feuerfestmaterials stetig geringer wird. Dies erhöht die mögliche Standzeit des Feuerfestmaterials entsprechend.

Bei der Herstellung des feuerfesten Produktes kann dieser Effekt technologisch auf unterschiedliche Weise berücksichtigt werden:
- Beispielsweise wird der Verschleißgrad des Feuerfestmaterials unterschiedlich eingestellt, indem beispielsweise die Porosität von der Kontaktfläche zur Schmelze in Richtung auf die gegenüberliegende Außenfläche sinkt und/oder die Festigkeit steigt.
- Ebenso ist es möglich, den Konzentrationsgradienten der genannten Komponenten senkrecht zur Kontaktfläche mit der Schmelze zu erhöhen, sodass entsprechend einer geringeren Verschleißtiefe gleichwohl die gleiche Menge der gewünschten Komponente in die Schmelze überführt wird.

## Patentansprüche

1. Verfahren zur Herstellung eines keramischen Produkts, das bei seiner bestimmungsgemäßen Anwendung als Auskleidungsmaterial oder Funktionalprodukt einer Einrichtung zur Aufnahme, Behandlung und/oder Durchleitung einer Stahlschmelze, Nicht-Eisenschmelze, Glasschmelze oder Gesteinsschmelze feuerfest ist, mit folgenden Schritten:
a) Aufbereitung eines keramischen Versatzes aus mehreren Versatzkomponenten,
b) Auswahl und Einstellung mindestens einer Versatzkomponente derart, dass diese Versatzkomponente nach einer Verarbeitung des Versatzes zu dem Produkt im Produkt eine Komponente bildet, die bei anwendungskonformem Kontakt der Schmelze mit dem Produkt aus dem Produkt in die Schmelze abgegeben wird, und
c) der Anteil dieser Komponente in der Schmelze erhöht wird und Abweichungen einer Ist- von einer Sollanalyse der der Einrichtung entnommenen Schmelze bezüglich mindestens dieser Schmelzenkomponente geringer sind als bei der der Einrichtung zugeführten oder in der Einrichtung zuvor behandelten Schmelze.

2. Verfahren zur Herstellung eines keramischen Produkts, das bei seiner bestimmungsgemäßen Anwendung als Auskleidungsmaterial oder Funktionalprodukt einer Einrichtung zur Aufnahme, Behandlung und/oder Durchleitung einer Stahlschmelze, Nicht-Eisenschmelze, Glasschmelze oder Gesteinsschmelze feuerfest ist, mit folgenden Schritten:
a) Aufbereitung eines keramischen Versatzes aus mehreren Versatzkomponenten,
b) Auswahl und Einstellung mindestens einer Versatzkomponente derart, dass diese Versatzkomponente nach einer Verarbeitung des Versatzes zu dem Produkt im Produkt eine Komponente bildet, die bei anwendungskonformem Kontakt der Schmelze mit dem Produkt in eine chemische Reaktion mit der Schmelze tritt und mindestens ein Reaktionsprodukt schafft, das anschließend als Legierungsbestandteil unmittelbar von der Schmelze aufgenommen wird, und
c) Abweichungen einer Ist- von einer Sollanalyse der der Einrichtung entnommenen Schmelze bezüglich mindestens dieses Legierungsbestandteils geringer sind als bei der der Einrichtung zugeführten oder in der Einrichtung zuvor behandelten Schmelze.

## Claims

1. A process for producing a ceramic product that is fire-resistant when used as authorized as jacketing material or functional product of a device for receiving, treating and/or passing through a steel melt, non-ferrous-melt, glass melt or mineral melt, with the following steps:
a) preparation of a ceramic batch consisting of several batch components,
b) selection and adjustment of at least one batch component in such a manner that after a processing of the batch to the ceramic product this batch component forms a component in the product which is released from the product into the melt when the product gets in contact with the melt when the product is used as authorized, and
c) the amount of this component in the melt is increased and deviations of an analysis between a melt removed from the device and a theoretical analysis are less regarding this melt component than between the melt supplied to the device or previously treated in the device.

2. A process for producing a ceramic product that is fire-resistant when used as authorized as jacketing material or functional product of a device for receiving, treating and/or passing through a steel melt, non-iron-melt, glass melt or mineral melt, with the following steps:
a) preparation of a ceramic batch consisting of several batch components,
b) selection and adjustment of at least one batch component in such a manner that after a processing of the batch to the ceramic product this batch component forms a component in the product which enters into a chemical reaction with the melt when the product gets in contact with the melt when the product is used as authorized, and forms at least one reaction product, which subsequently is absorbed by the melt as an alloying component and
c) deviations of an analysis between a melt removed from the device and a theoretical analysis are less regarding this alloying component than between the melt supplied to the device or previously treated in the device.

## Revendications

1. Procédé de fabrication d'un produit céramique qui est réfractaire lors qu'il est mis en oeuvre, conformément sa finalité, en tant que revêtement intérieur ou produit fonctionnel dans un dispositif destiné à la réception, au traitement et/ou au passage d'un acier en fusion, d'un métal non-ferreux en fusion, d'un verre en fusion ou d'une roche en fusion, comprenant les étapes suivantes :
a) préparation d'un mélange à partir de plusieurs composants de mélange,
b) choix et dosage d'au moins un composant de mélange de façon à ce que ledit composant de mélange forme, suite à la transformation dudit mélange pour obtenir ledit produit, un composant au sein dudit produit qui sera libéré par le produit pour passer dans ladite matière en fusion quand le produit est en contact avec la matière en fusion conformément à la mise en oeuvre indiquée,
c) la proportion dudit composant au sein de ladite matière en fusion augmente et les écarts entre une valeur de consigne et une valeur réelle étant, au moins pour ce composant de la matière en fusion, moins importants dans la matière en fusion sortant dudit dispositif que dans la matière en fusion introduite dans ledit dispositif ou préalablement traitée au sein dudit dispositif.

2. Procédé de fabrication d'un produit céramique qui est réfractaire lors qu'il est mis en oeuvre, conformément sa finalité, en tant que revêtement intérieur ou produit fonctionnel dans un dispositif destiné à la réception, au traitement et/ou au passage d'un acier en fusion, d'un métal non-ferreux en fusion, d'un verre en fusion ou d'une roche en fusion, comprenant les étapes suivantes :
a) préparation d'un mélange à partir de plusieurs composants de mélange,
b) choix et dosage d'au moins un composant de mélange de façon à ce que ledit composant de mélange forme, suite à la transformation dudit mélange pour obtenir ledit produit, un composant au sein dudit produit qui, une fois la matière en fusion entre en contact avec le produit conformément à la mise en oeuvre indiquée, entrera un réaction chimique avec ladite matière en fusion et résulte en formation d'au moins un produit de réaction qui sera ensuite intégré directement par la matière en fusion pour en constituer un composant d'alliage, et
c) les écarts entre une valeur de consigne et une valeur réelle étant, au moins pour ce composant d'alliage, moins importants dans la matière en fusion sortant dudit dispositif que dans la matière en fusion introduite dans ledit dispositif ou préalablement traitée au sein dudit dispositif.
